# EUROPEAN PATENT SPECIFICATION

(11) **EP 3 068 941 B1**
(45) Date of publication and mention of the grant of the patent: **06.04.2022**
(21) Application number: 13789800.3
(22) Date of filing: 13.11.2013
(51) Int. Cl.: D06F 39/00, D06F 39/12, F28D 1/053

(54) **HEAT PUMP WASHING APPARATUS**
WÄRMEPUMPENWASCHVORRICHTUNG
APPAREIL DE LAVAGE À POMPE À CHALEUR

(43) Date of publication of application: 21.09.2016
(73) Proprietor: Electrolux Appliances Aktiebolag, 105 45 Stockholm (SE)
(72) Inventor: CAVARRETTA, Francesco, I-33080 Porcia (PN) (IT)
(74) Representative: Electrolux Group Patents
(86) International application number: PCT/EP2013/073718
(87) International publication number: WO 2015/070900

(56) References cited:
- EP-A1- 2 096 203
- EP-A2- 2 206 824
- WO-A1-2012/132924
- CN-B- 102 230 693
- GB-A- 2 344 643
- JP-A- 2010 069 194
- US-A- 5 048 602
- US-A1- 2011 239 696

## Description

### FIELD OF THE INVENTION

The present invention relates to a washing apparatus for washing goods as, for example, a dish washing machine or a laundry washing machine.

In the present application the washing machine can be a washing machine or a washing-drying machine (i.e. a washing machine which can both wash and dry the goods).

In particular, the present invention relates to a washing apparatus including a heat pump.

### BACKGROUND ART

In a washing machine, it is known to use an electric heater to heat water in a washing chamber.

In order to save energy consumption and/or reduce the duration of the washing cycles, it is known to use a heat pump system in place of or besides the electric heater for heating the water.

For example, EP 2 096 203 discloses a household washing machine comprising a tub, a heater and a container. The container contains waste water (i.e. used process water) of a previous process phase (e.g. washing or rinsing phase). The household washing machine also comprises a heat pump system comprising an evaporator thermally coupled to the container, a condenser, a compressor and an expansion valve. A heat pump medium (which is also called "refrigerant" in the following description) is pumped from the compressor to the condenser, where liquefaction takes place accompanied by release of heat. The released heat is used to warm process water contained in the tub. From the condenser the medium passes via the expansion valve to the evaporator where the medium evaporates whilst absorbing heat from the waste water contained in the container. From the evaporator the medium runs back to the compressor. At the end of each process phase, the waste water is drained away from the tub into a waste water line via the container wherein the cooled waste water is replaced.

However, heat pump systems are not widely used for heating up the washing water of washing machines due to two main reasons:
i) the heat pump system transfers heat from a source to another one: a source is cooled down while the washing water is heated up, so that the cooling power can be discharged in the surrounding ambient (with clear disadvantages for users) or it must be stored in a suitable thermal storage;
ii) the space available inside a machine is very limited, causing space constraints for the heat exchangers, i.e. the condenser that warms up the washing water and the evaporator that rejects cooling power towards the ambient or in the thermal storage.

With respect to point i), heat pump washing machines provided with thermal storage have been proposed, so that the cooling power can be easily stored.

For example, EP 2 206 824 discloses a household appliance comprising a tub, a thermal storage tank filled with a liquid and a heat pump system for extracting heat from the liquid contained in the tank and supplying the heat to the tub. In particular, the liquid is cooled down and iced by the cooling heat rejected by the evaporator of the heat pump while the condenser warms up the washing water. In other words, the cooling power rejected by the evaporator of the heat pump can be stored in a tank containing a liquid. Said liquid (for example water) is cooled down and then frozen.

The tank of EP 2 206 824 is a closed tank whose content is not changed within the framework of the normal process carried out by the household appliance. It is also stated that a heat exchanger can be provided between a waste water line and the tank in order to transfer heat from the waste water into the liquid tank. The closed tank is used in order to avoid contamination of the tank with deposits from waste water from the tub.

The Applicants observe that during operation of the heat pump, the liquid in the tank is cooled down with respect to a starting temperature and, optionally, at least partially iced. The cooled/iced liquid needs to be regenerated, that is warmed up again towards the starting temperature, in order to be used again for a next, optionally immediately subsequent, process cycle. In case of ice generation, it is preferable that all the ice is melted before the next process cycle is started. However, the heat exchanger used in the tank of EP 2 206 824 is of the coil tube type, which are relatively bulky, so that the tank is also bulky. Therefore, the above drawbacks under point ii) are not satisfactorily solved.

US2011/239696 discloses an evaporator with a cool storage function which includes a plurality of flat refrigerant flow tubes disposed in parallel such that their width direction coincides with an air flow direction and they are spaced from one another. Air-passing clearances are formed between adjacent refrigerant flow tubes. Cool storage material containers filled with a cool storage material are disposed in some of all the air-passing clearances, and each cool storage material container is brazed to the refrigerant flow tubes located on opposite sides thereof.

Corrugated fins are disposed in the remaining air-passing clearances, and each fin is brazed to the refrigerant flow tubes located on opposite sides thereof. Each cool storage material container includes a plurality of convex portions projecting outward from opposite side surfaces thereof, and projecting ends of the convex portions are joined to the corresponding refrigerant flow tubes. This evaporator with a cool storage function can suppress a drop in cooling performance.

US5048602 shows a heat exchanger which includes a core and a pair of headers, the core including flat tubes and corrugated fins sandwiched between the tubes, the headers having holes in which the end portions of the tubes are inserted, wherein each tube comprises a stop means for ensuring that an adequate length of the tubes become inserted in the headers.

CN102230693 relates to a parallel flow heat exchanger with high heat exchange efficiency. The heat exchanger comprises an upper collecting pipe, a lower collecting pipe and a plurality of flat pipes arranged between the two collecting pipes, wherein a flow control plate is fixed in the lower collecting pipe and divides the lower collecting pipe into a first cavity and a second cavity; a refrigerant pipe joint is arranged on the wall surface of the first cavity; and the second cavity is communicated with the flat pipes. The heat exchanger is characterized in that at least three communicating holes are arranged on the flow control plate and communicate the first cavity with the second cavity; and at least a distance between a communicating hole and the adjacent communicating hole is different from the distances between other adjacent communicating holes. The heat exchanger has the following beneficial effects: the uniformity of flow in the parallel flow heat exchanger can be improved under the condition of different refrigerant flow rates, thus improving the heat exchange efficiency; such air-conditioners with refrigerants flowing variably as inverter air-conditioners can have higher energy efficiency; and meanwhile, the heat exchanger is more convenient to install and is stable, and the flow resistance is slightly increased under the condition of realizing better uniform flow.

It is an object of the invention to provide an alternative washing apparatus provided with a heat pump system.

It is another object of the invention to provide a heat pump washing apparatus that has a relatively compact heat pump.

It is a further object of the invention to provide a heat pump washing apparatus that has improved design and construction, high reliability and long lifetime.

Advantages, objects, and features of the invention will be set forth in part in the description and drawings which follow and in part will become apparent to those having ordinary skill in the art upon examination of the following or may be learned from practice of the invention.

### SUMMARY OF THE INVENTION

The Applicants found that the above objects are achieved by a washing apparatus wherein a heat exchanger of the heat pump comprises at least one heat exchanger module including a plurality of heat exchange layers being stacked one above the other in a predetermined direction and each heat exchange layer includes a plurality of channels.

This module is used either to heat or to cool down liquid, preferably water, contained preferably, but not necessarily, in a storage tank.

The use of the above-mentioned heat exchanger module including a plurality of heat exchange layers having a plurality of channels enables, among others, to improve the efficiency of the cooled/iced liquid regeneration with respect to the solution described by EP 2 206 824, as well as to improve the reliability of the washing machine and to lengthen its lifetime.

In addition, modules can be used to warm up water in a tank to be used in washing cycles.

Indeed, such a solution of a heat pump having the heat exchanger module including a plurality of stacked layers comprises, due to the specific design, a very wide heat exchange surface in a relatively small volume, thus compact heat exchangers can be realized. In this way, occupying the same volume, either a heat pump more efficient than in the prior art can be realized, or a smaller heat pump can be obtained, leaving more free volume inside the washing apparatus for additional components. In turn, a compact heat exchanger can be housed in compact tank, in the embodiments in which a tank is present.

The invention is defined in independent claim 1. Particular embodiments are set out in the dependent claims.

Accordingly, in an aspect, the present invention relates to a washing apparatus comprising:
o a chamber for receiving goods to be washed,
o a heat pump comprising a first heat exchanger, a second heat exchanger, a compressor and a pressure lowering device forming a circuit comprising a refrigerant, the first heat exchanger being adapted to cool said refrigerant and to heat washing water to be used in the chamber, the second heat exchanger being adapted to heat said refrigerant and to cool an auxiliary fluid,
o wherein said second heat exchanger comprises at least one heat exchanger module, said module including:
   ▪ an inlet header to direct a flow of said refrigerant into said module;
   ▪ an outlet header to discharge a flow of said refrigerant from said module; and
   ▪ a plurality of heat exchange layers fluidly connecting said inlet to said outlet header to enable said refrigerant to flow from said inlet to said outlet header and/or vice versa; said layers being stacked one above the other in a predetermined direction, each heat exchange layer including a plurality of channels.

The washing apparatus comprises:
o a thermal storage tank adapted to contain a liquid,
o and wherein said second heat exchanger is adapted to heat said refrigerant and to cool the liquid contained in the thermal storage tank, said auxiliary fluid being said liquid contained in said thermal storage tank;
o said second heat exchanger comprising said heat exchanger module.

The washing apparatus includes a worktop, said worktop including a hollow cavity forming said thermal storage tank.

The above-mentioned heat exchanger module including a plurality of heat exchange layers having a plurality of channels is advantageously very compact, so as to improve the design and construction of the washing apparatus of the present invention.

Due to the above mentioned configuration of the heat exchanger of the invention, a high ratio between the heat transfer capacity and the heat exchanger volume is achieved: a reduction of the overall dimensions of the heat exchanger is therefore possible, and thus the volume occupied by it within a casing of the washing apparatus can be also reduced. For example, the amount of space occupied by the heat exchanger(s) in a basement of the washing apparatus can be much reduced without affecting the amount of exchanged heat, on the contrary the latter quantity is kept substantially constant. In addition, a significant reduction on the amount of refrigerant needed and of the pressure drop on the refrigerant circuit is obtained.

Alternatively, the washing apparatus of the invention may include a heat exchanger having the same dimensions as the one of the prior art, but with an increased cooling and/or heating capacity, due to the above mentioned reasons, and therefore improving the energy consumption.

In other words, the heat exchanger module(s) used as first and/or second heat exchanger (i.e. the condenser and/or evaporator of the heat pump, respectively) ensures a proper heat exchange between the refrigerant and the fluid, fluid which is either the washing water or the auxiliary fluid, and limits the space of the assembly consisting of the evaporator and /or the condenser.

It is to be understood that the first and/or the second heat exchanger may include more than one heat exchanger module. Moreover, both the first and the second heat exchangers might include the heat exchanger module having a plurality of heat exchanger layers stacked one above the others, or only the first heat exchanger can include such a module, or only the second. For example, one of the first or the second heat exchanger may include the heat exchanger module and the other of said first or second heat exchanger may include a "standard" heat exchanger, such as for example a tube in tube heat exchanger.

According to the aforementioned aspect, the washing apparatus of the invention may include, alternatively or in combination, any of the following characteristics.

In a preferred embodiment of the invention, each of said heat exchange layers defines a first and second heat exchange surfaces between a first and a second longitudinally opposite ends and wherein said module includes one layer and an adjacent layer in said predetermined direction, and an empty gap free of any structural element is interposed between said first surface of said layer and said second surface of said adjacent layer.

Preferably, the claimed heat exchanger module provides an empty gap free of any further structural element between one layer and an adjacent layer in said predetermined direction, and thus the heat exchanger module lacks fins, or any further structural element, interposed between at least one couple of adjacent layers thereof.

The layers include each a first and a second surface in which heat transfer takes place. The first surface of one layer faces, unless the layer is the first or the last layer in the module, the second surface of an adjacent layer. "Adjacent" means the subsequent layer along the stacking direction. The fact that a free gap is present between two adjacent layers means that no structural element is connected to or it is present between the first and the second surfaces of the adjacent layers.

The longitudinal ends of the layers can be on the other hand connected either to the header(s), such as the inlet and/or outlet header of the module, or to the adjacent layer(s) of the module.

In the embodiment of the invention including the thermal storage tank, said heat exchanger module of the evaporator is used as refrigerant-to-water heat exchanger module, i.e. it is used for the heat exchange between the refrigerant and the liquid (for example washing water) contained in the thermal storage tank.

In order to have an efficient thermal exchange between the refrigerant and the liquid present in the thermal storage tank, and at the same time minimizing the amount of liquid in the thermal storage tank itself, so as to minimize the tank's dimensions, the liquid in the thermal storage tank is preferably frozen during the heat exchange, while the refrigerant is absorbing heat.

Preferably, in this embodiment including the thermal storage tank, the heat exchanger module is housed, at least partially, inside the thermal storage tank.

More preferably, in this embodiment including the thermal storage tank and the heat exchanger module housed at least partially therein, fins are not present between heat exchange layers of the heat exchanger module.

Due to the fact that the layers of the module do not comprise fins therebetween, the thermal dilatation of the icing liquid in the thermal storage tank cannot damage the heat exchanger module(s) and the layers thereof. Therefore, heat exchanger modules provided with fins are not preferred to be used in this embodiment in the present invention, because damages or breakings could occur at the contact points between the layers and the fins due to icing of the liquid contained in the thermal storage tank during heat pump functioning.

Alternatively, a heat exchanger layers having a plurality of fins properly spaced between the layers can be envisaged as well. Fins having a wide enough pitch, for example, could also prevent damage during freezing.

Advantageously, the washing apparatus comprises
o a washing water tank adapted to contain washing water, said washing water tank being in fluid communication to said chamber;
o wherein the first heat exchanger is adapted to cool said refrigerant and to heat washing water contained in said thermal storage tank; and
o wherein the first heat exchanger comprises at least one heat exchanger module.

In this embodiment, the condenser includes the heat exchanger module having a plurality of stacked heat exchanger layers. This condenser is used to warm up water in a washing water tank to be used in the washing cycles.

Preferably, in this embodiment including the washing water tank, the heat exchanger module is housed, at least partially, inside the washing water tank.

More preferably, in this embodiment including the washing water tank and the heat exchanger module housed at least partially therein, fins are not present between heat exchange layers of the heat exchanger module.

The absence of fins or any further structural element in the heat exchanger module prevents that the first heat exchanger (i.e. the condenser) is clogged with lint or dirt which is inevitably present in the washing water which from the washing water tank flows to the chamber and possibly also vice-versa.

Preferably, said channels of each heat exchange layer are arranged one parallel to the others.

Advantageously, said heat exchange layers of said module are arranged one parallel to the others.

In this way, a very efficient module, having at the same time a relatively easy construction, is realized.

Preferably, said heat exchange layers of said module are spaced apart by a same predetermined first distance.

Advantageously, said predetermined first distance is lower than 20 mm, more preferably lower than 5 mm.

A short distance between heat exchange layers allows having, in the volume occupied by the module, the insertion of many heat exchange layers and thus the achievement of a relatively wide heat exchange surface.

Preferably, said second heat exchanger is thermally coupled to said thermal storage tank, more preferably said heat exchanger module of said second heat exchanger is at least partially arranged in said thermal storage tank.

Preferably, said first heat exchanger is thermally coupled to said washing water tank, more preferably said heat exchanger module of said first heat exchanger is at least partially arranged in said washing water tank.

The presence of the heat exchanger module of the first and/or the second heat exchanger within the tank, either the washing water tank and/or the thermal storage tank, allows obtaining the most efficient heat exchange between refrigerant and fluid present in the tank, due to the direct contact between the heat exchange layers and the fluid (water or other liquid) with which heat exchange takes place.

More preferably, the heat exchange layers, where heat exchange takes place, are located within tank (either thermal storage or washing water tank), and the headers can be located outside the tank itself.

In a less preferred alternative embodiment, the heat exchanger module is not located, not even partially, inside the tank (either thermal storage or washing water tank), but it is located adjacent or in contact to one of the tank's walls, so as thermal coupling between the heat exchanger module and the tank is present.

In a preferred embodiment, both said first and said second heat exchangers include at least one of said heat exchanger module.

In this embodiment, the heat pump includes the first and the second heat exchangers both including a heat exchanger module (or more than one) having a plurality of stacked heat exchange layers.

More preferably, in this embodiment with both heat exchanger including a heat exchanger module, said second heat exchanger is adapted to heat said refrigerant and to cool a process air blown in an auxiliary circuit, said auxiliary circuit including a fan to move said process air.

The evaporator thus, including the heat exchanger module, might in this preferred embodiment be a refrigerant-to-air heat exchanger, cooling the refrigerant thanks to process air blown by a fan present in the auxiliary circuit.

The auxiliary circuit could be either a recirculating circuit for the air, or a duct or passage within the casing of the washing apparatus. The inlet and the outlet of such a circuit are for examples apertures in the casing.

Advantageously, the washing apparatus includes
o a washing water tank adapted to contain washing water, said washing water tank being in fluid communication to said chamber,
o a thermal storage tank adapted to contain a liquid,
o wherein said second heat exchanger is adapted to heat said refrigerant and to cool the liquid contained in the thermal storage tank, said auxiliary fluid being said liquid contained in said tank; and
o wherein the first heat exchanger is adapted to cool said refrigerant and to heat washing water contained in said washing water tank.

Thus two tanks, one used to contain the washing water heated up by the first heat exchanger so that the heated water can be used in the washing cycles, and a second one used to contain fluid (e.g. water) cooled down by the second heat exchanger so that the heat can be extracted (heating up the refrigerant), are included in the present preferred embodiment. Preferably, both first and second heat exchangers are refrigerant-to-liquid heat exchangers including the heat exchanger module. The efficiency of the heat pump is thus increased.

Advantageously, the washing apparatus further comprises a water outlet circuit for discharging waste water from the chamber.

Preferably, the thermal storage tank is fluidly connected to water mains by means of a conduit configured so as to supply tap water from the water mains to the thermal storage tank bypassing said chamber.

In this embodiment, said auxiliary fluid includes tap water.

As mentioned, when heat exchange takes place in the thermal storage tank, during heat pump operation, the liquid present therein preferably freezes at least partially. The frozen liquid needs to be regenerated so that, in the next operation of the washing apparatus, the refrigerant can be warmed up again efficiently absorbing heat from the liquid. Thus, in order to liquefy the frozen liquid in the thermal storage tank, preferably tap water is introduced inside the tank itself. The introduction of tap water can take places at any moment in time during the washing/rinsing/spinning cycles, being independent from the latter (e.g. the water used for regeneration does not come from the chamber), allowing a great flexibility in the washing apparatus' operations.

In this embodiment, the fluid present in the thermal storage tank is water, preferably tap water that comes into the thermal storage tank via a conduit, which bypasses the chamber. This means that there is no direct fluid communication between the chamber and the thermal storage tank. Advantageously, also a water outlet to discharge the tap water from the thermal storage tank is present.

Alternatively, the thermal storage tank is fluidly connected to the chamber by means of a discharge conduit configured so as to supply drain water from the chamber to the tank. In this embodiment, said auxiliary fluid includes drain water.

Instead of introducing as an auxiliary fluid in the thermal storage tank the tap water, the drain water from the chamber is used. The advantage of this configuration is that the drain water, i.e. the water which has been used in the washing cycle(s) to wash the items present in the chamber, is relatively warm and can defrost the liquid in the thermal storage tank rather quickly. However, the regeneration of the liquid in the thermal storage tank in this embodiment can take place only when the washing cycle(s) has ended.

In an additional alternative preferred embodiment, said thermal storage tank is a closed tank, without auxiliary fluid inlet and/or outlet.

In this embodiment, the thermal storage tank contains a fixed amount of auxiliary fluid which does not change with time, the thermal storage tank being filled during the apparatus fabrication, without additional refilling necessary. No auxiliary fluid inlet or auxiliary fluid outlet are present, however a refrigerant inlet and a refrigerant outlet has to be present in case the second heat exchanger is located at least partially inside the thermal storage tank itself. Thus a "sealed" or "closed" tank in the present context refers to a tank that does not have fluid inlet or outlet, where with "fluid" the fluid being in contact with the tank's walls is meant. On the contrary, in such a closed or sealed tank, refrigerant inlet and/or outlet feeding the heat exchanger can be present, the refrigerant not being in contact with the tank's walls.

Preferably, the washing apparatus includes a water circuit fluidly connecting said washing water tank and said chamber, said water circuit being a recirculation circuit to recirculate the water from the chamber to the tank and vice-versa.

In this way, the water heated in the washing water tank by the first heat exchanger is moved to the washing chamber, for example as soon as a certain pre-set temperature of the washing water heated by the first heat exchanger is reached, to be used in the washing cycles. The water from the chamber preferably returns to the tank to be heated up again.

In an alternative embodiment, the water circuit is not a recirculation circuit. The water is heated up in the washing water tank and introduced in the chamber when a given temperature is reached. The tank is afterwards filled up again with tap water.

Advantageously, the channels have a hydraulic diameter smaller or equal than 5 mm.

According to an embodiment of the invention, the hydraulic diameter of each channel, where the hydraulic diameter D_{H} is defined as D_{H} = 4 A / P (where A is the cross sectional area of the channel and P is the wetted perimeter of the cross-section of the channel), is smaller or equal than 5 mm, i.e. D_{H} ≤ 5 mm, more preferably D_{H} ≤ 3 mm, even more preferably D_{H} ≤ 1 mm.

Due to the size of the hydraulic diameter, the module of the invention may include many channels, therefore the refrigerant flow is divided in a plurality of smaller refrigerant streams, one per channel. In this way the pressure drop of the refrigerant within the channels is reduced compared to the refrigerant pressure drop in bigger channels.

Additionally, it is known that the maximum pressure that a pipe can withstand is inversely proportional to its hydraulic diameter. A small hydraulic diameter therefore means that the channels can withstand higher pressures than bigger pipes. For this reasons, high pressures refrigerants, such as carbon dioxide, can be used in the heat pump circuit of the dryer of the invention.

Moreover, still due to the smaller size, a smaller amount of refrigerant is needed for the proper functioning of the module than in standard heat pump dryers. Use of hydrocarbons, which are flammable, can be therefore also considered, due to the low amount required.

The shape of the cross section of the channels is not relevant for the present invention, and it can be squared, rectangular, circular (in this case the hydraulic diameter coincide with the diameter of the circle), elliptic, and so on. The cross section of the plurality of channels does not have to be the same for all channels in the plurality, but it can be different and the various channels can have a combination of the possible above listed cross sections. In addition, the cross section may vary both in hydraulic diameter and/or in shape along the extension of the channel.

Preferably, said heat exchange layer includes a plurality of channels one parallel to the others.

In case the channels are rectilinear, their longitudinal extension (and longitudinal direction) corresponds to their longitudinal axis. In case the channels are not rectilinear, i.e. for example they are forming arches, their longitudinal extension (and longitudinal direction) corresponds to the line joining the point from which they depart from the inlet/outlet header and the first point having the maximum distance from the inlet/outlet header longitudinal axis.

The channels may include rectilinear portions and/or bumps or other turbulence-inducing elements that may enhance the heat transfer between the refrigerant and the air process stream. Additionally, channels may include smooth or corrugated inner and/or outer surfaces and may comprise bends or curves.

In an advantageous embodiment, said hollow cavity of said worktop also forms said washing water tank.

The worktop is thus preferably substantially integral with the tank, either the thermal storage or the washing water tank, or both, which is realized as a hollow portion of the worktop. More preferably, it includes also the heat exchanger housed at least partially in the tank. The worktop includes in this way in addition to the top cover of the casing of the washing apparatus, also a portion of the heat pump.

### BRIEF DESCRIPTION OF THE DRAWINGS

Further features and advantages of the present invention shall become clearer from the following detailed description of preferred embodiments thereof, made with reference to the attached drawings and given as an indication and not for limiting purposes.

In particular, the attached drawings are included to provide a further understanding of the invention and are incorporated in and constitute a part of this specification. The drawings together with the description serve to explain the principles of the invention. In the drawings, corresponding characteristics and/or components are identified by the same reference numbers. In such drawings:
- figure 1 schematically shows a washing apparatus realized according to the invention;
- figure 1a schematically shows an example of the washing apparatus of figure 1;
- figure 2 schematically shows an embodiment of the washing apparatus according to the invention;
- figure 3 schematically shows another embodiment of the washing apparatus according to the invention;
- figure 4 schematically shows another example of the washing apparatus of figure 1a;
- Fig. 5 schematically shows a perspective view of an element (heat exchanger module) of the washing machine of Fig. 1 or 1a;
- Fig. 6 schematically shows another perspective view in partial section of the element (heat exchanger module) of fig. 5;
- Figs. 7 and 8 schematically show perspective views of the element of Fig. 5 arranged in two different further elements (thermal storage tank) of the washing apparatus of Fig. 1a;
- Figs. 9a and 9b schematically show a lateral and top views, respectively, of a different embodiment of the element of fig. 5; and
- Fig. 10 schematically shows a lateral view of a further different embodiment of the element of fig. 5.

### DETAILED DESCRIPTION OF PREFERRED EMBODIMENTS OF THE INVENTION

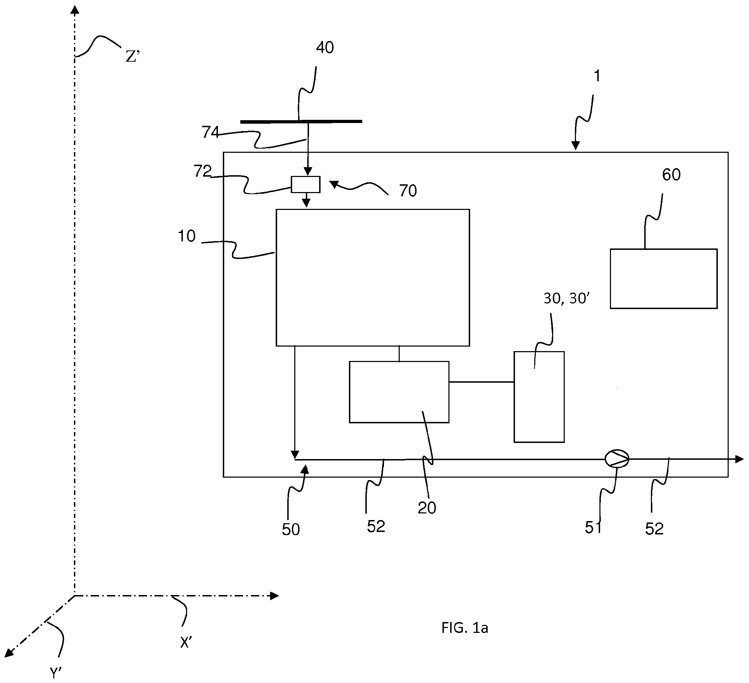

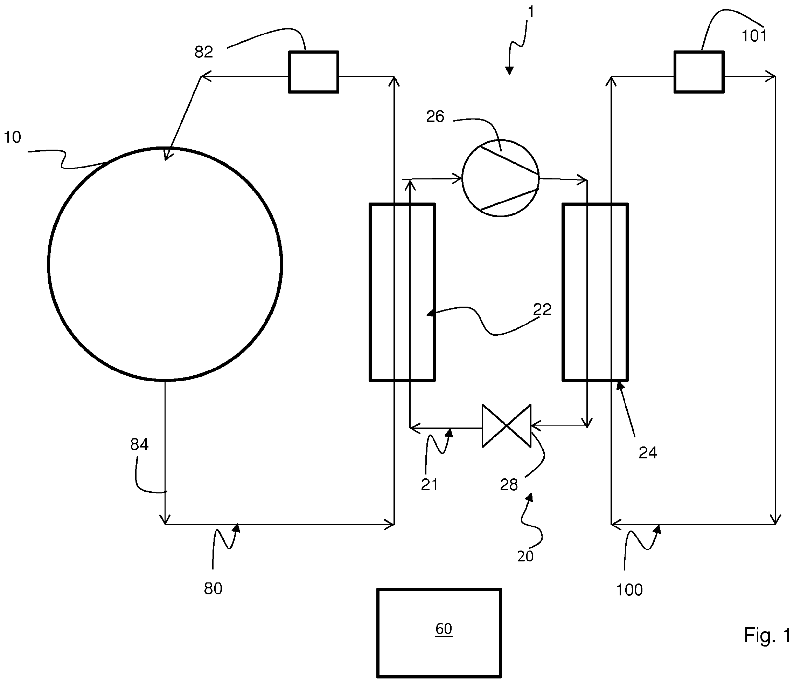

With initial reference to figs. 1 and 1a, a heat pump washing apparatus is globally indicated with 1. The heat pump washing apparatus may include preferably a washing machine to wash clothes, or a dish washer. The washing machine can mean either a washing machine only or a washing-drying machine.

In the following, as an example, a washing machine is detailed. Washing apparatus 1 comprises a chamber 10 for treating goods, such as clothes, and advantageously further comprises a water inlet circuit 70 adapted to supply water, that can be optionally mixed with washing products, into the chamber 10. In the case of a laundry washing machine, the chamber 10 can be a tub which contains a drum rotatably mounted and optionally perforated (not shown).

The water inlet circuit 70 preferably comprises a detergent dispenser 72 and water inlet pipes 74.

Advantageously, the water inlet pipes 74 fluidly connect water mains 40 to the chamber 10, preferably via the detergent dispenser 72, while the latter 72 is adapted to be filled with products, for example detergents, softener, bleaching, sparkling/rinse aid substances, etc. The detergent dispenser 72 can comprise one or more compartments (not shown) for one or more products from which a certain amount of these products, depending on the washing program, is delivered into the chamber 10.

The washing apparatus 1 also comprises a water outlet circuit 50 for discharging waste water (i.e. used water optionally mixed with washing products) from the chamber 10 after process cycles (e.g., washing, rinsing cycles).

The water outlet circuit 50 can comprise a draining pump 51 and outlet draining pipes 52, for example apt to be connected to the sewage system (not shown).

The water outlet circuit 50 is advantageously fluidly connected to the bottom of the chamber 10.

Furthermore, washing apparatus 1 comprises a heat pump system 20 adapted to heat water to be used in the chamber 10. In order to heat such water, heat pump system has to absorb heat from an auxiliary fluid.

For this purpose, washing apparatus 1 may include a tank 30' apt to contain the auxiliary fluid from which heat is absorbed, as detailed below and as shown in figure 1a. Heat is absorbed from the auxiliary fluid present in the thermal storage tank, and the fluid can at least partially freeze.

In a different embodiment, the auxiliary fluid is not contained in the thermal storage tank 30', but flows in an auxiliary circuit 100.

Alternatively or in addition, the washing apparatus 1 may include a washing water tank 30 (see figure 1a) apt to be filled with washing water which is - as soon as a given temperature is reached - introduced into the chamber 10 to be used for the washing cycles. Water in the washing water tank 30 is heated up by the heat pump.

The heat pump system 20 comprises a refrigerant circuit 21, which is a closed recirculating circuit, in which a refrigerant can flow, and which comprises: a first heat exchanger 22 acting as a condenser for cooling the refrigerant and to heat water to be used in the process chamber 10, a second heat exchanger 24 acting as an evaporator for heating the refrigerant and to cool the auxiliary fluid, a compressor 26 arranged in the circuit between the first heat exchanger and the second heat exchanger, and a pressure lowering device 28 arranged between the second heat exchanger and the first heat exchanger.

As shown in figure 1, the auxiliary fluid cooled by the second heat exchanger could be a fluid flowing in the auxiliary circuit 100. The auxiliary circuit 100 preferably is a closed recirculating circuit and preferably the auxiliary fluid is water. Auxiliary circuit 100 further preferably includes a pump 101 to force fluid circulation in the circuit.

Alternatively, the auxiliary circuit 100 is a circuit in which air flows and the auxiliary fluid is process air blown by fan 101. The auxiliary circuit 100 can be open having an inlet and an outlet (not depicted in the appended drawings) realized in a casing of the washing apparatus 1.

In normal operation, the refrigerant is circulated within the circuit 21 by the compressor 26. Compressor 26 can be for example a variable speed compressor. The pressure lowering device 28 is preferably a controllable valve that operates under the control of a control unit to adapt the flow resistance for the refrigerant in dependency of operating states of the heat pump system 20. In alternative embodiments, the pressure lowering device 28 may include a capillary tube, a throttle valve with fixed or variable cross section, etc. (all not shown).

During operation of the heat pump 20 (that is, when the compressor 26 is switched-on), heat is generated at the condenser 22 and cold is generated at the evaporator 24.

The refrigerant is pumped from the compressor 26 to the condenser 22, where liquefaction of the refrigerant takes place transferring heat from the refrigerant to the water to be used in the chamber 10. This water to be used in the chamber 10 either flows in a water circuit 80, 90 or is contained in a washing water tank 30, as detailed below.

The condenser 22 is part of a water circuit, better detailed below, so that the water for washing items present in the chamber is warmed up due to the heat exchange with the refrigerant.

From the condenser 22, the refrigerant passes via the pressure lowering device 28 to the evaporator 24 where the refrigerant evaporates thus heat is transferred from the auxiliary fluid to the refrigerant. From the evaporator 24, the refrigerant runs back to the compressor 26.

Within the evaporator 24, heat exchange takes place between the refrigerant in the refrigerant circuit 21 and the auxiliary fluid in the auxiliary circuit 100 or in tank 30'.

In case the auxiliary fluid is a liquid flowing in auxiliary circuit 100, the auxiliary fluid partially freezes during heat exchange with the refrigerant, which absorbs heat. In a similar manner, the auxiliary fluid present in the thermal storage tank 30' freezes, at least partially, when heat exchange takes place.

In an example including the auxiliary circuit 100, in the second heat exchanger, the flow of refrigerant and the flow of auxiliary fluid are in opposite directions.

The water to be used in the chamber 10 is preferably made to flow through the condenser 22 so that it exchanges energy with the refrigerant by forced convention. The water can be continuously recirculated by a pump through the condenser 22 and back to the chamber 10 until the desired temperature is reached or tap water can be heated directly, by flowing through the condenser 22, before entering into the chamber 10.

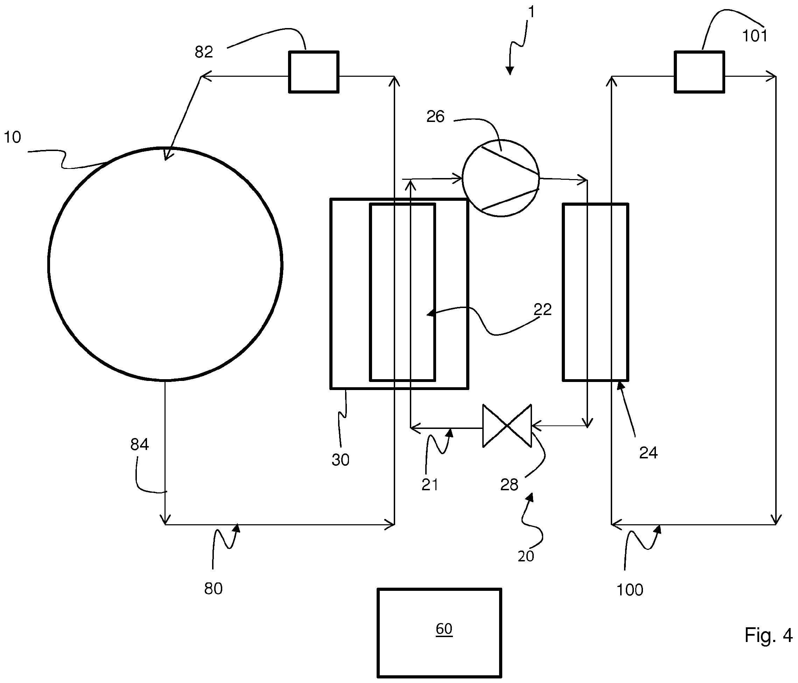

Figure 4 shows an example of the washing machine 1 of figure 1a including a washing water tank 30. This embodiment is substantially analogue to the example of figure 1 and thus only the differences will be detailed.

Washing water tank 30 is located along the refrigerant circuit 21.

Preferably, condenser 22 is positioned at least partially within the washing water tank 30, to heat up the water contained in the latter. More preferably, condenser 22 is completely contained in washing water tank 30.

The condenser 22 is described more in detail below. The water to be used in the chamber 10 is preferably made to flow through the washing water tank 30 where condenser 22 is located so that it exchanges heat with the refrigerant by forced convention. The water can be continuously recirculated by a pump in a washing circuit 80 through the washing water tank 30 with condenser 22 and back to the chamber 10 until the desired temperature is reached or tap water can be heated directly, by flowing through the condenser 22, before entering into the chamber 10. Thus, the tank 30 "stores" the heated up water.

In this example, the auxiliary fluid from which heat is absorbed in order to heat up the washing water in washing water tank 30 can be a liquid or air that circulates in the auxiliary circuit 100.

Washing water circuit 80 in the example of fig. 4 is a recirculating circuit.

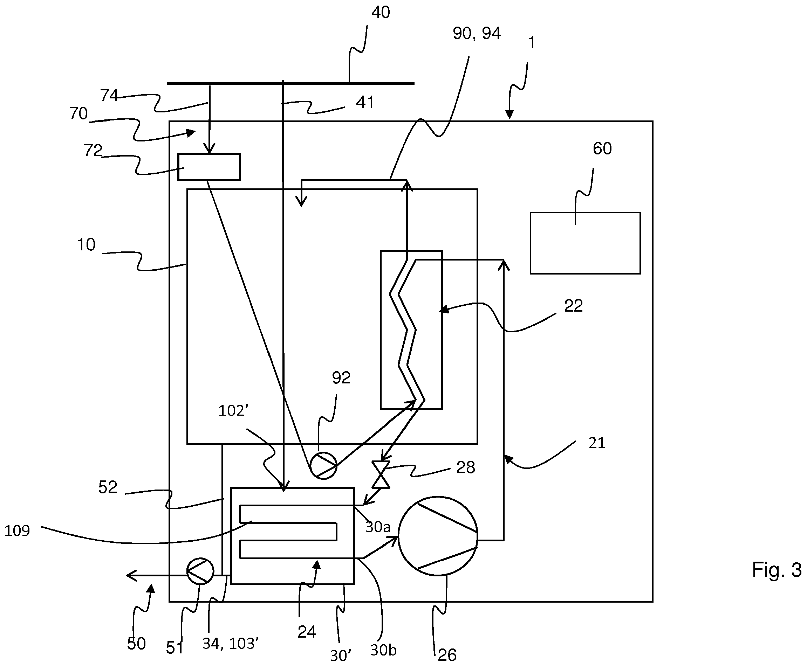

Alternatively, with reference to fig. 3 (the reference to this figure is made only for the arrangement of the water circuit), the washing machine 1 comprises a different water circuit 90.

The water circuit 90 comprises a pump 92 and pipes 94 adapted to directly drain tap water from the water mains 40 bypassing the chamber 10, to conduct the tap water through the washing water tank 30 (not shown in figure 3) where the condenser 22 is located and then into the chamber 10, without recirculation. In order to guarantee that the desired process temperature is reached, the tank 30, heat exchanger 22, and the flow rate of the water should be suitably sized.

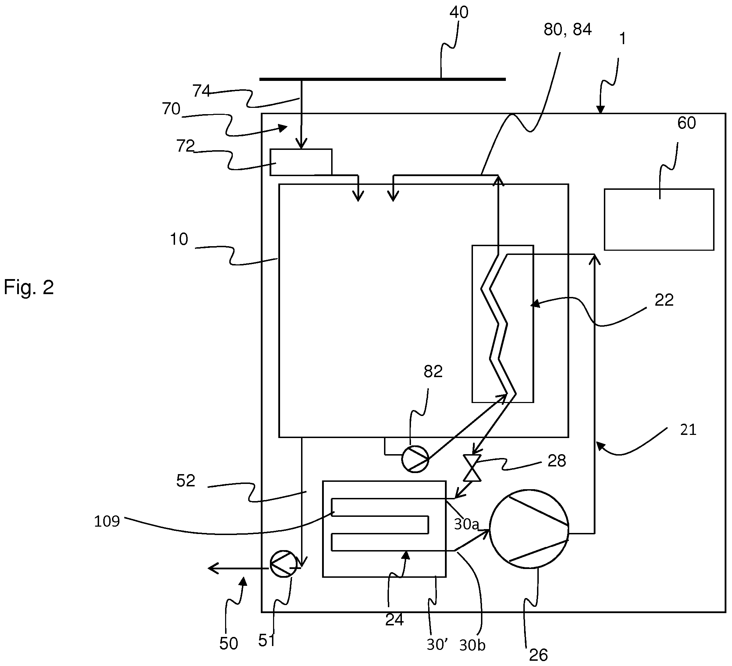

With now reference to figures 2 and 3, a different example of the washing machine 1 of fig. 1a is depicted, where a thermal storage tank 30' is included. This example is an embodiment of the invention.

In this embodiment, the evaporator 24 of heat pump 20 is housed within the tank 30'. The apparatus 1 and heat pump system 20 includes the same characteristics as described in the above embodiment with reference to fig. 1, 1a and 4. In the following only the differences between the examples of figs. 1, 1a and 4 and the embodiments of figs. 2 and 3 will be detailed.

The chamber 10 is fed with warm water which is heated by condenser 22, and which is flowing into water circuit 80, 90 as described with reference to figs. 1, 1a and 4.

In this embodiment, washing water tank 30 might or might not be present and, in the first case, the condenser 22 can be located - at least partially - within the washing water tank 30. Therefore, an embodiment of the present invention includes both the thermal storage tank 30' and the washing water tank 30. The washing water tank 30 is used as described in the examples of figs. 1a and 4. Alternatively, only thermal storage tank 30' can be included, without the presence of washing water tank 30.

The heat produced in the condenser 22 is extracted from the auxiliary fluid by the evaporator 24. In this embodiment, the evaporator 24 is housed, at least partially, in the thermal storage tank 30' and the auxiliary fluid is the liquid contained in the thermal storage tank 30'.

Due to the fact that, during heat pump operation, the fluid within the tank 30' freezes, at least in part, it needs to be regenerated in order to be used for subsequent washing operations, where heat needs again to be extracted from the liquid present in the thermal storage tank 30'. Different regeneration schemes are possible, so that the fluid frozen in the tank 30' can melt in a relatively quick manner.

Tank 30' is - in a preferred embodiment of the invention - sealed, i.e. there is no input or output for the auxiliary fluid contained therein. Preferably, tank 30' is filled in the factory during the apparatus' production and the auxiliary fluid is not refilled or replaced during the remaining apparatus' useful life. This embodiment is shown in fig. 2. "Sealed" means that there are no inlet and outlet pipes for the liquid (=auxiliary fluid) present in the tank, however inlet and outlet pipes for the refrigerant flowing in the evaporator are present, in case the evaporator is located, at least partially, within the thermal storage tank 30'.

In this embodiment of fig. 2, regeneration takes place due to the heat of the ambient where the tank 30' is located.

Alternatively, as depicted in fig. 3, the thermal storage tank 30' may include a fluid input 102' which is directly fluidly connected to a water source, such as public water mains 40 in order to be able to directly receive tap water from it. The input 102' and the water mains 40 are suitably connected to each other through a tap water conduit 41, which is adapted to supply tap water from the water mains 40 to the tank 30'. The tap water conduit 41 bypasses the chamber 10.

In this case, regeneration takes place by means of the tap water flowing into the thermal storage tank 30'. Preferably, tank 30' includes - in addition to the fluid input 102' to receive the tap water - also preferably a fluid output 103' fluidly connected to the water outlet circuit 50 in order to drain away liquid from the tank 30' via the water outlet circuit 50. The output 103' and the water outlet circuit 50 are suitably connected through pipes 34.

In a non-depicted embodiment, the regeneration takes place due to the drain water contained in the chamber 10 and a conduit connects tank 30' to the chamber 10. In this case, the drain water used to wash items into chamber 10 is additionally used for the regeneration of the frozen liquid. Its relatively high temperature speeds up the regenerative process.

In all embodiments of figs. 2 and 3, the auxiliary fluid contained in the tank 30' advantageously is water.

The tank 30' containing the evaporator 24 is advantageously positioned on a bottom region of the washing machine 1. However, it can be positioned in any location of the washing apparatus.

With reference to fig. 1a, and from 2 to 4, the amount of liquid contained in the thermal storage tank 30' and washing water tank 30, as well as their volume, depends on the amount of water that must be heated up during a process cycle of the washing machine 1, the temperature required for the water, the dimensions of heat exchangers 22, 24 possibly housed in the tank 30, 30' and the percentage of frozen liquid in the tank 30'.

The shape of the tank 30, 30' can be of any type; advantageously it has a box-like shape. Preferably, tank 30, 30' is closed, i.e. it defines a finite inner volume. This means that the tank 30, 30' is surrounded by walls in all directions; however apertures for piping are envisaged.

Thermal storage tank 30' may include the input and the output 102', 103' for the auxiliary fluid or it can be sealed, e.g. there is no exchange of auxiliary fluid to the outside of the tank 30'. It is to be understood that, in case the evaporator 24 is housed in tank 30', thermal storage tank 30' has to include an input and an output for the flow of refrigerant into the evaporator 22.

Washing water tank 30 is always including an input and an output for the auxiliary fluid, in this case water, in order to draw and bring water from/to chamber 10, so it cannot be sealed.

As an example, in the embodiments of fig. 2 and 3, from tank 30', suitable input and output piping 30a, 30b for the refrigerant protrude in order to connect the evaporator 24 to the remaining refrigerant circuit 21 outside tank 30'. Although not shown in the appended drawings, analogue piping for the refrigerant protruding from the washing water tank 30 can be present as well.

The thermal storage tank 30' can be thermally coupled to the water outlet circuit 50 in order to transfer heat from waste water flowing through the pipes 52 into the liquid contained in the thermal storage tank 30'. For example, thermal coupling can be achieved by placing the draining pipes 52 in contact with the tank 30'.

In addition or in alternative, the tank 30' can be thermally coupled to electronic components and heated elements inside the machine (not shown, as for example compressor, motor, inside air). The thermal energy released by these components can be transferred to the liquid in the tank 30' for example by natural convection, forced convection or conduction.

The washing apparatus 1 according to any of the above embodiments suitably comprises a control unit 60 configured to control operation of the washing apparatus 1.

The first and/or the second heat exchanger 22, 24 includes one or more heat exchanger modules 102. The structure of a single module 102 will be now described, which may belong to the first and/or second heat exchanger.

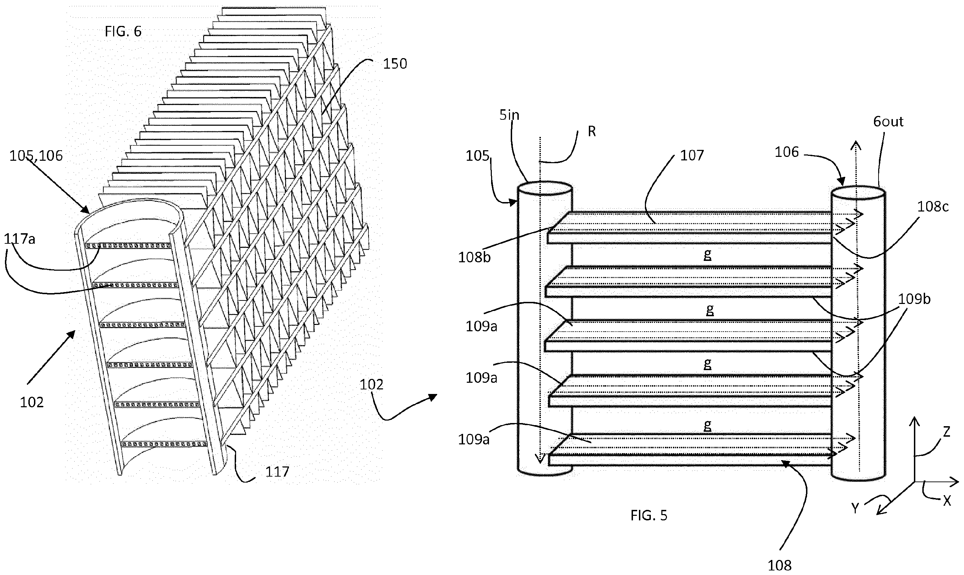

With now reference to figs. 5-10, the heat exchanger module 102 includes an inlet header 105 and an outlet header 106. Inlet and outlet headers 105, 106 have preferably the structure of a pipe. The headers 105, 106 have a longitudinal extension along an axis, which corresponds to the main direction of flow of the refrigerant within the headers. The refrigerant is flowing into the module 102 via the inlet header 105 and exiting the same via the outlet header 106. A plurality of channels, each indicated with 107, is fluidly connecting the inlet to the outlet header and vice-versa, so that the refrigerant can enter and exit the module. In the plurality of channels 107, the refrigerant flows and heat exchange takes place between the refrigerant and either the washing water to be used in the chamber 10 or the auxiliary fluid.

The channels 107, due to their configuration, allow a better heat exchange between the refrigerant and the auxiliary fluid or washing water.

Channel 107 defines a longitudinal direction X along which it extends, which correspond to the longitudinal extension of the heat exchange layer 108.

The channels 107 are grouped in heat exchange layers 108: each heat exchange layer includes a plurality of channels 107 which are preferably adjacent and parallel to each other. More preferably, each heat exchanger module 102 includes a plurality of heat exchange layers 108, more preferably all layers 108 are stacked one above the other(s) in a stacking direction Z and even more preferably parallel to each other, substantially forming a plurality of parallel rows.

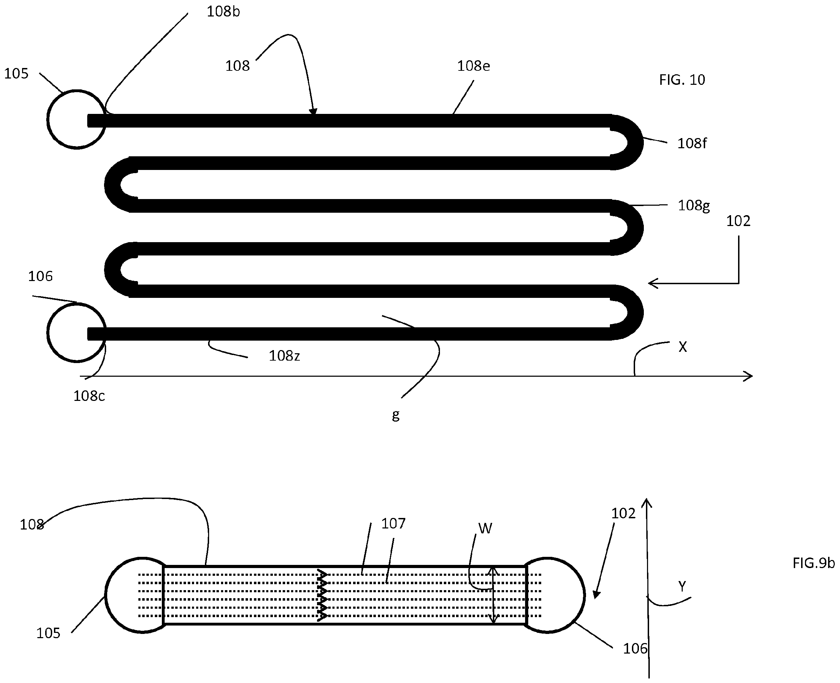

Each heat exchange layer 108 has a width W (visible in figure 9b) which depends on the number of channels 107 which are located one adjacent to the other.

Each heat exchange layer 108 defines a first and a second surface 109a, 109b which extends along a longitudinal direction X and have the width W above described. Each couple of adjacent stacked heat exchange layers 108 of a module includes facing surfaces, e.g. the first surface of a layer of the couples faces the second surface of the adjacent layer of the couple. The distance between the two layers is preferably identical for all couples of adjacent layers along the stacking direction in a module 102. Preferably such distance is lower than 20 mm, even more preferably lower than 5 mm.

Between each couple of adjacent heat exchange layers, a free space or gap g is preferably present. In other words, the first and the second surfaces 109a, 109b which are facing each other are free from any structural element. No element is not located nor interposed between them. The layers 108 are connected to other structural elements, such as the headers, only via their longitudinal opposite ends 108b, 108c.

Alternatively, as shown in figure 6, a plurality of fins 150 can be located between each couple of adjacent heat exchange layers.

The width W of the layer 108 defines a direction Y which, together with the longitudinal direction X of channels 107, defines in turn a heat exchange layer plane (X,Y). The heat exchange layer plane (X, Y) can be perpendicular to the stacking direction Z or form an angle with the same. Moreover, each heat exchange layer 108 can also be not planar, but for example curved, e.g., having a concavity pointing either up or down along the stacking direction.

As an example, in fig. 6 a section of a header 105, 106 is represented. The header 105, 106 includes a cylindrical envelope 117 in which a plurality of holes 117a are realized. Each hole 117a indicates one of the ends of the channels 107 forming the heat exchange layer 108. However different configurations are possible.

The cross section of the headers 105, 106 is circular, as shown in the appended drawings, or oblong. The cross section of the header refers to the cross section of the header along a plane perpendicular to the stacking direction Z. Preferably, the oblong cross section is such that its smallest diameter, i.e., the smallest cord passing through the geometrical center of the cross section, is smaller than the width W of the layer 108.

The refrigerant entering the module 102 via the inlet header 105 can come from the outlet header 106 of another module 102, from the compressor 26 or from the pressure lowering device 28. Additionally, the refrigerant exiting the outlet header 106 may be directed towards the inlet header 105 of another module 102, towards the pressure lowering device 28 or towards the compressor 26. In the following figures, the flow of the refrigerant R will be indicated with a dotted line having a pointing arrow in the direction of the flow.

Each heat exchange layer 108 includes two opposite ends 108b, 108c. In some embodiments, one end 108b is connected to the inlet header 105 and the opposite end 108c is connected to the outlet header 106. Alternatively, an additional intermediate header can be present, as detailed below. Alternatively, the ends 108b, 108c of the layer can be connected to the ends of adjacent layer(s) and only the lowermost and/or topmost layers are connected to either the inner or the outlet header.

According to a first embodiment of the module 102 of the washing apparatus 1 of the invention depicted in fig. 5, the inlet and outlet headers 105,106 are parallel one to the other and extends along the stacking direction Z, and the channels 107 connecting the two headers 105, 106 are substantially straight along the longitudinal direction X. Channels 107 form heat exchange layers 108, each of which includes an upper and a lower surfaces 109a, 109b within which the channels 107 are realized. A plurality of heat exchange layers 108 connects the inlet 105 to the outlet header 106, all heat exchange layers having a first end 108b and a second end 108c longitudinally opposite to each other, the first end being connected to the inlet header and the second end being connected to the outer header. Heat exchange layers are stacked one above the other(s) along the stacking direction Z and each of them forms a plane (X, Y) defined by the longitudinal extension X of the channels 107 and the width W. The module 102 is mounted so that the heat exchange layers 108 form planes between which the fluid (either the washing water or the auxiliary fluid) with which heat exchange takes place is present. In each header 105, 106 in correspondence of each heat exchange layer's end 108b, 108c, a plurality of apertures 117a is realized; from each aperture 117a a channel 107 departs. The so-formed rows of apertures 117a (visible only in fig. 6) are parallel one to the other and perpendicular to the longitudinal extension Z of the header 105, 106.

The refrigerant R enters the inlet header 105 of module 102 via an inlet aperture 5in along a flow direction parallel to the longitudinal extension Z of header 105 and branches off into the various channels 107 via apertures 117a. The heat exchange layers 108 are "parallel" to each other according to the refrigerant flow direction, which means that in all layers the refrigerant flows in the same direction. In each channel 107 forming the same layer 108, the flow of the refrigerant is substantially parallel to the flow direction of the refrigerant in the other channels and has the same direction. The refrigerant then exits the module 102 via an outlet aperture 6out of outlet header 106.

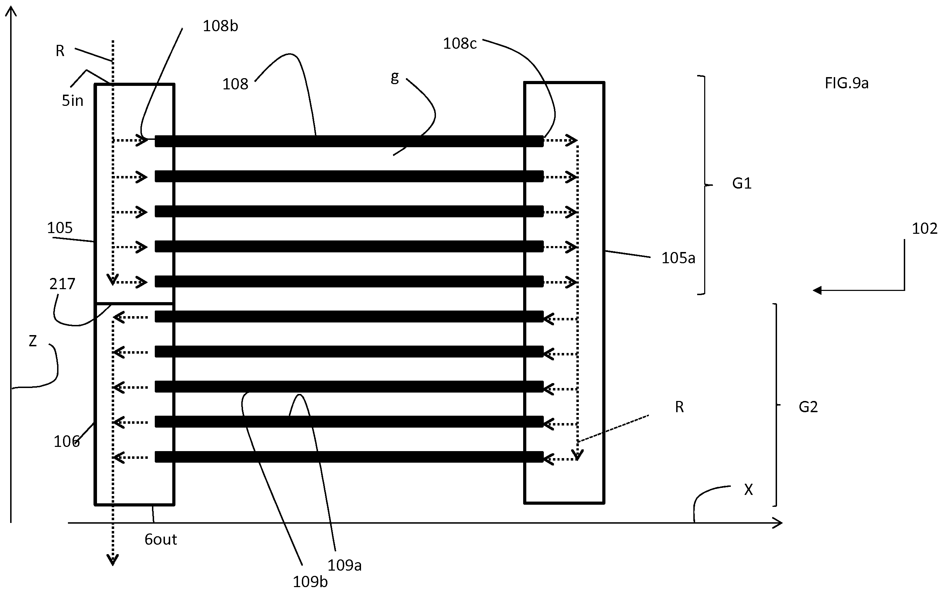

According to another embodiment of the module 102 of the present invention, depicted in figs. 9a and 9b, the inlet and the outlet headers 105, 106 are stacked in the stacking direction Z one above the other. In other words, the inlet and the outlet header 105, 106 are formed by the same pipe or tube, which includes a transverse separator 217 dividing the tube in two separated portions. The module 102 of this embodiment thus includes three parallel vertical headers connected by heat exchange layers 108, but two of the headers, the inlet and the outlet headers 105, 106, are realized as a single tube divided in two. The third header 105a is an intermediate return header for the refrigerant flow. The heat exchange layers 108 are parallel one to the other defining layers' plane (X, Y). Each layer 108 includes two opposite longitudinal ends 108b, 108c, one end being connected to either the inlet or the outlet header 105, 106 and the other end being connected to the intermediate return header 105a. The flow of refrigerant entering the inlet header 105 is therefore prevented by separator 217 to go from the inlet to the outlet header. The heat exchange layers 108 are thus divided in two groups: the first group G1 connects the inlet header 105 to the intermediate return header 105a and the second group G2 connects the intermediate header 5a to the outlet header 106.

The refrigerant R flow which enters the inlet header 105 is distributed via apertures 117a into the first group G1 of heat exchange layers 108 and the refrigerant flows within the parallel channels in the first group G1 towards the intermediate return header 105a. Therefore, the layers 108 within the first group G1 are parallel with respect to the refrigerant flow. The refrigerant streams exit the heat exchange layers 108 forming the first group G1 and enter the intermediate return header 105a, where they merge. From the intermediate header 105a, the refrigerant flow then enters the heat exchange layers 108 forming the second group G2, reaching the outlet header 106. Thus, also the heat exchange layers within the second group G2 are parallel to each other with respect to the refrigerant flow. However, the layers of the two groups G1, G2 are in series with respect to the refrigerant flow. Indeed, the refrigerant flows in parallel in all heat exchange layers belonging to the same group, while the refrigerant has to flow through the heat exchange layers of first and the second group in a given order - the layers of the two groups being thus in series.

According to an additional embodiment of the module 102 of the washing apparatus 1 of the invention, depicted in fig. 10, the module 102 includes only two headers 105, 106, the inlet and the outlet header. In this case, not all layers are connected to both inlet and outlet headers 105, 106, on the contrary only the first and the last layers are connected to the inlet and the outlet layer, respectively. All other layers 108 have their ends 108b, 108c connected to their adjacent layers, e.g. one end to their lower and one end to their upper layer. Thus, the various layers 108 are substantially formed by a single plurality of cannels bending on themselves several times in order to form the stacked layers. Channels layers 108 are parallel to each other. The single plurality of channels 107 defines a first rectilinear portion 108e defining the first channels layer connected to the inlet header 105 via one of its ends 108b, it then includes a U-shaped bend 108f and it extends for a second rectilinear portion 108g parallel to the first rectilinear portion 8e defining the second channels layer, and so on, till the last rectilinear portion 108z forming the last layer, which is connected by one of its ends 108c to the outlet header 106. In this way, a single row of apertures 117a is formed in each header 105, 106 and the flow of refrigerant in the various layers 108 can be considered in series with respect to the refrigerant flow. The flows of refrigerant within the various channels 107 forming the channels layers are parallel to each other.

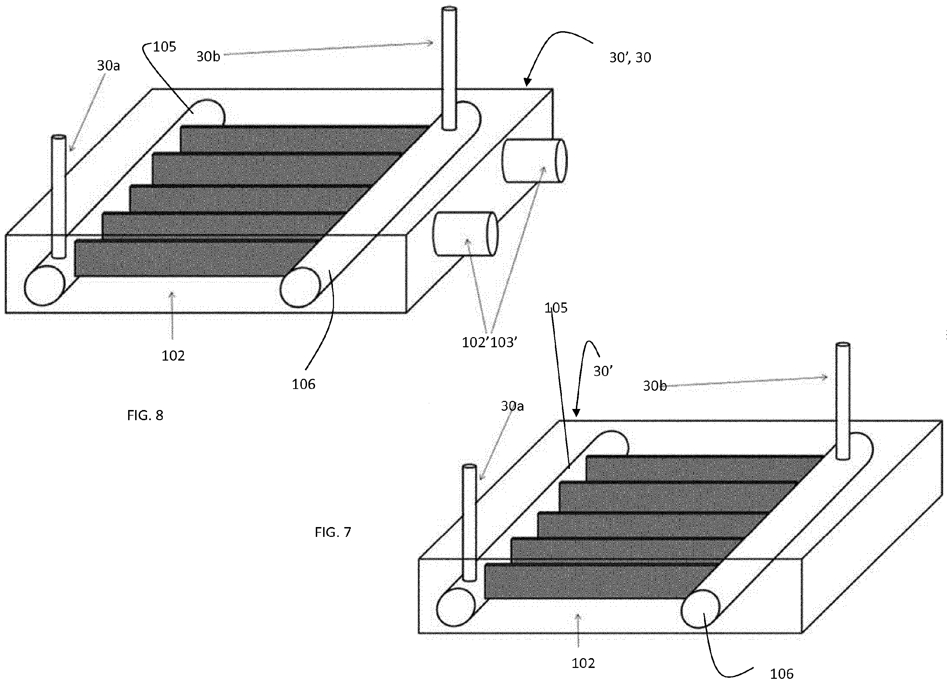

With now reference to figures 7 and 8, the module 102 is shown contained inside tank 30, 30'. Although the module 102 is shown completely contained in tank 30, 30', in can also be housed in the latter only partly, for example headers 105, 106 can protrude from the same. Alternatively, the module 102 can be thermally coupled to the tank 30, 30' without being housed in the same, for example tank 30, 30' can be positioned on one (or more) of the external surfaces of the tank's walls.

Figure 7 shows thermal storage tank 30' of embodiment depicted in figure 2. Indeed the tank 30' is a closed tank, without inlet or outlet for the auxiliary fluid. From tank 30', only an inlet and an outlet 30a, 30b for the refrigerant depart.

Figure 8 shows either thermal storage tank 30' of the embodiment of figure 3, or washing water tank 30 of example of figure 4. indeed, tank 30, 30' includes an inlet and an outlet 102', 103' for the water and it is thus connected to the water circuit. In washing water tank 30, the water circuit is water circuit 80, 90 that connects the washing water tank 30 to the chamber 10 so that the water heated up by condenser 22 in thermal coupling to washing water tank 30 can be introduced into chamber 10. Thermal storage tank 30' can be connected either to the mains or to the chamber 10 as far as the inlet 102' is concerned, while the outlet 103' preferably is connected to the discharge outlet circuit 50.

The connection of tank 30' with the mains improves the regeneration of the liquid in the tank 30'.

In a preferred embodiment, either the first or the second heat exchanger 22, 24 includes one or more module 102.

For example, in the example of figure 1, the condenser 22 could be a standard "tube-in-tube" exchanger, while the evaporator 24 could include module 102 and the auxiliary fluid flowing in the circuit 100 could be air.

Preferably, in all examples and embodiments where a tank is present, either the thermal storage tank 30' or the washing water tank 30, and a heat exchanger 24, 22 is located at least partially into the tank, then the heat exchanger located inside the tank comprises at least one module 102.

Therefore, in figure 4, condenser 22 housed in washing water tank 30 includes at least one module 102. In figures 2 and 3, evaporator 24 housed in thermal storage tank 30' includes at least one module 102.

Moreover, in an additional embodiment of the invention, both first and second heat exchangers 22, 24 include at least one module 102.

In a further different embodiment, both first and second heat exchangers 22, 24 include module 102 and both are located, at least partially, inside a respective tank.

When the washing machine 1 is turned on in order to perform a predetermined washing program, the control unit 60 is advantageously configured to switch the heat pump 20 on when water has to be heated into the chamber 10 in order to perform a process cycle (e.g. washing, rinsing, and similar) of the predetermined washing program.

The control unit 60 is also advantageously configured to switch the heat pump 20 off when the water in the chamber 10 coming from washing water tank 30 reaches a desired process temperature or when the liquid in the thermal storage tank 30' reaches a predetermined condition (for example, when it is in large part iced).

According to a preferred embodiment not depicted in the drawings, tank 30, 30' including module 102 (either inserted totally or partially in tank 30, 30' or thermally coupled to the latter) are part of a ready-to-mount element of the washing apparatus 1 called worktop. Ready-to-mount element means that the worktop and the tank form an integral element. The worktop is a structural part of the apparatus 1 and can be mounted on a casing of the latter simplifying the apparatus' assembly.

In order to include the tank 30,30', the worktop includes an hollow element in which a heat exchanger 22, 24 can be housed.

Preferably, the worktop contains at least part of the heat pump 20. More preferably it contains the first and/or the second heat exchanger 22, 24 and at least part of the refrigerant fluid 21.

In this case, the tank 30, 30' and/or one of the heat exchanger 22, 24 are located on the top of the washing apparatus 1.

Although illustrative embodiments of the present invention have been described herein with reference to the attached drawings, it is to be understood that the present invention is not limited to the specific embodiment illustrated and described herein, and that various other changes and modifications may be affected therein by one skilled in the art without departing from the scope of the invention which is defined in the following claims.

## Claims

1. A washing apparatus (1) comprising:
a casing having a top cover,
a chamber (10) for receiving goods to be washed,
a heat pump (20) comprising a first heat exchanger (22), a second heat exchanger (24), a compressor (26) and a pressure lowering device (28) forming a circuit comprising a refrigerant (R), the first heat exchanger (22) being adapted to cool said refrigerant and to heat washing water to be used in the chamber (10), the second heat exchanger (24) being adapted to heat said refrigerant and to cool an auxiliary fluid, and
a thermal storage tank (30') adapted to contain a liquid,
wherein said second heat exchanger (24) comprises at least one heat exchanger module (102), said module including:
an inlet header (105) to direct a flow of said refrigerant (R) into said module;
an outlet header (106) to discharge a flow of said refrigerant (R) from said module; and
a plurality of heat exchange layers (108) fluidly connecting said inlet to said outlet header to enable said refrigerant to flow from said inlet to said outlet header and/or vice versa; said layers being stacked one above the other in a predetermined direction, each heat exchange layer including a plurality of channels (107);
wherein said second heat exchanger (24) is adapted to heat said refrigerant (R) and to cool the liquid contained in the thermal storage tank (30'), said auxiliary fluid being said liquid contained in said thermal storage tank (30'); and
a worktop, said worktop including the top cover and
a hollow cavity forming said thermal storage tank (30').

2. The washing apparatus (1) according to claim 1, comprising
a washing water tank (30) adapted to contain washing water, said washing water tank (30) being in fluid communication to said chamber (10);
wherein the first heat exchanger (22) is adapted to cool said refrigerant (R) and to heat washing water contained in said washing water tank (30); and
wherein the first heat exchanger (22) also comprises a heat exchanger module (102),
said module including:
an inlet header (105) to direct a flow of said refrigerant (R) into said module;
an outlet header (106) to discharge a flow of said refrigerant (R) from said module; and
a plurality of heat exchange layers (108) fluidly connecting said inlet to said outlet header to enable said refrigerant to flow from said inlet to said outlet header and/or vice versa;
said layers being stacked one above the other in a predetermined direction, each heat exchange layer including a plurality of channels (107).

3. The washing apparatus (1) according to any of the preceding claims, wherein said channels (107) of each heat exchange layer (108) are arranged one parallel to the others.

4. The washing apparatus (1) according to any of the preceding claims, wherein said heat exchange layers (108) of said heat exchanger module (102) are arranged one parallel to the others.

5. The washing apparatus (1) according to any of the preceding claims, wherein said heat exchange layers (108) of said heat exchanger module (102) are spaced apart by a same predetermined first distance, wherein said predetermined first distance is lower than 20 mm.

6. The washing apparatus (1) according to claim 5, wherein said heat exchange layers (108) of said heat exchanger module (102) are spaced apart by a same predetermined first distance, wherein said predetermined first distance is lower than 5 mm.

7. The washing apparatus (1) according to any of the preceding claims, wherein said second heat exchanger (24) is thermally coupled to said thermal storage tank (30').

8. The washing apparatus (1) according to claim 7, wherein said heat exchanger module (102) of said second heat exchanger (24) is at least partially arranged into said thermal storage tank (30').

9. The washing apparatus (1) according to claim 8, wherein the layers (108) of the module (102) do not comprise fins therebetween.

10. The washing apparatus (1) according to any of the preceding claims when dependent on claim 2, wherein said first heat exchanger (22) is thermally coupled to said washing water tank (30).

11. The washing apparatus (1) according to claim 10, wherein said heat exchanger module (102) of said first heat exchanger (22) is at least partially arranged into said washing water tank (30).

12. The washing apparatus (1) according to any of the preceding claims, wherein each of said heat exchange layers (108) defines a first and second heat exchange surfaces (109a, 109b) between a first and a second longitudinally opposite ends (108b, 108c) and wherein said heat exchanger module (102) includes one layer and an adjacent layer in said predetermined direction, and an empty gap (g) free of any structural element is interposed between said first surface (109a) of said layer and said second surface (109b) of said adjacent layer.

13. The washing apparatus (1) according to any of the preceding claims, further comprising a water outlet circuit (50) for discharging waste water from the chamber (10).

14. The washing apparatus (1) according to any of the preceding claims, wherein said thermal storage tank (30') is fluidly connected to water mains (40) by means of a conduit (41) configured so as to supply tap water from the water mains (40) to the thermal storage tank (30') bypassing said chamber (10).

15. The washing apparatus (1) according to claim 14, wherein said auxiliary fluid includes tap water.

16. The washing apparatus (1) according to any of claims 1-13, wherein the thermal storage tank (30') is a closed tank, without auxiliary fluid inlet and/or outlet.

## Patentansprüche

1. Waschvorrichtung (1), umfassend:
ein Gehäuse mit einer oberen Abdeckung,
eine Kammer (10) zum Aufnehmen von Waschgut,
eine Wärmepumpe (20), die einen ersten Wärmetauscher (22), einen zweiten Wärmetauscher (24), einen Kompressor (26) und eine Drucksenkungsvorrichtung (28) umfasst, die einen Kreislauf bilden, der ein Kältemittel (R) umfasst, wobei der erste Wärmetauscher (22) dazu ausgelegt ist, das Kältemittel zu kühlen und das in der Kammer (10) zu verwendende Waschwasser zu erwärmen, und der zweite Wärmetauscher (24) dazu ausgelegt ist, das Kältemittel zu erwärmen und eine Hilfsflüssigkeit zu kühlen, und
einen Wärmespeichertank (30'), der dazu ausgelegt ist, eine Flüssigkeit zu enthalten,
wobei der zweite Wärmetauscher (24) mindestens ein Wärmetauschermodul (102) umfasst, wobei das Modul aufweist:
einen Einlasssammler (105), um einen Fluss des Kältemittels (R) in das Modul zu leiten;
einen Auslasssammler (106), um einen Fluss des Kältemittels (R) aus dem Modul abzuleiten; und
eine Vielzahl von Wärmetauschschichten (108), die den Einlass- mit dem Auslasssammler strömungstechnisch verbinden, damit das Kältemittel vom Einlass- zum Auslasssammler und/oder umgekehrt fließen kann; wobei die Schichten in einer vorbestimmten Richtung übereinander gestapelt sind und jede Wärmetauschschicht eine Vielzahl von Kanälen (107) aufweist;
wobei der zweite Wärmetauscher (24) dazu ausgelegt ist, das Kältemittel (R) zu erwärmen und die im Wärmespeichertank (30') enthaltene Flüssigkeit zu kühlen, wobei die Hilfsflüssigkeit die in dem Wärmespeichertank (30') enthaltene Flüssigkeit ist; und
eine Arbeitsplatte, wobei die Arbeitsplatte die obere Abdeckung und einen Hohlraum aufweist, der den Wärmespeichertank (30') bildet.

2. Waschvorrichtung (1) gemäß Anspruch 1, umfassend:
einen Waschwassertank (30), der dazu ausgelegt ist, Waschwasser zu enthalten, wobei der Waschwassertank (30) strömungstechnisch mit der Kammer (10) verbunden ist;
wobei der erste Wärmetauscher (22) dazu ausgelegt ist, das Kältemittel (R) zu kühlen und das im Waschwassertank (30) enthaltene Waschwasser zu erwärmen; und
wobei der erste Wärmetauscher (22) außerdem ein Wärmetauschermodul (102) umfasst,
wobei das Modul aufweist:
einen Einlasssammler (105), um einen Fluss des Kältemittels (R) in das Modul zu leiten;
einen Auslasssammler (106), um einen Fluss des Kältemittels (R) aus dem Modul abzuleiten; und
eine Vielzahl von Wärmetauschschichten (108), die den Einlass- mit dem Auslasssammler strömungstechnisch verbinden, damit das Kältemittel vom Einlass- zum Auslasssammler und/oder umgekehrt fließen kann;
wobei die Schichten in einer vorbestimmten Richtung übereinander gestapelt sind und jede Wärmetauschschicht eine Vielzahl von Kanälen (107) aufweist.

3. Waschvorrichtung (1) gemäß einem der vorhergehenden Ansprüche, wobei die Kanäle (107) jeder Wärmetauschschicht (108) parallel zueinander angeordnet sind.

4. Waschvorrichtung (1) gemäß einem der vorhergehenden Ansprüche, wobei die Wärmetauschschichten (108) des Wärmetauschermoduls (102) parallel zueinander angeordnet sind.

5. Waschvorrichtung (1) gemäß einem der vorhergehenden Ansprüche, wobei die Wärmetauschschichten (108) des Wärmetauschermoduls (102) um denselben vorbestimmten ersten Abstand voneinander beabstandet sind, wobei der vorbestimmte erste Abstand kleiner als 20 mm ist.

6. Waschvorrichtung (1) gemäß Anspruch 5, wobei die Wärmetauschschichten (108) des Wärmetauschermoduls (102) um denselben vorbestimmten ersten Abstand voneinander beabstandet sind, wobei der vorbestimmte erste Abstand kleiner als 5 mm ist.

7. Waschvorrichtung (1) gemäß einem der vorhergehenden Ansprüche, wobei der zweite Wärmetauscher (24) thermisch mit dem Wärmespeichertank (30') gekoppelt ist.

8. Waschvorrichtung (1) gemäß Anspruch 7, wobei das Wärmetauschermodul (102) des zweiten Wärmetauschers (24) mindestens teilweise im Wärmespeichertank (30') angeordnet ist.

9. Waschvorrichtung (1) gemäß Anspruch 8, wobei die Schichten (108) des Moduls (102) keine Rippen dazwischen umfassen.

10. Waschvorrichtung (1) gemäß einem der vorhergehenden Ansprüche bei Abhängigkeit von Anspruch 2, wobei der erste Wärmetauscher (22) thermisch mit dem Waschwassertank (30) gekoppelt ist.

11. Waschvorrichtung (1) gemäß Anspruch 10, wobei das Wärmetauschermodul (102) des ersten Wärmetauschers (22) mindestens teilweise im Waschwassertank (30) angeordnet ist.

12. Waschvorrichtung (1) gemäß einem der vorhergehenden Ansprüche, wobei jede der Wärmetauschschichten (108) eine erste und eine zweite Wärmetauschfläche (109a, 109b) zwischen einem ersten und einem zweiten, in Längsrichtung gegenüberliegenden Ende (108b, 108c) definiert und wobei das Wärmetauschermodul (102) eine Schicht und eine in der vorbestimmten Richtung angrenzende Schicht aufweist und ein leerer Zwischenraum (g), der frei von jeglichen Strukturelementen ist, zwischen der ersten Fläche (109a) der Schicht und der zweiten Fläche (109b) der angrenzenden Schicht angeordnet ist.

13. Waschvorrichtung (1) gemäß einem der vorhergehenden Ansprüche, ferner umfassend einen Wasserauslasskreislauf (50) zum Abführen von Abwasser aus der Kammer (10).

14. Waschvorrichtung (1) gemäß einem der vorhergehenden Ansprüche, wobei der Wärmespeichertank (30') über eine Leitung (41), die dazu eingerichtet ist, Leitungswasser aus dem Wassernetz (40) unter Umgehung der Kammer (10) zum Wärmespeichertank (30') zu leiten, strömungstechnisch mit dem Wassernetz (40) verbunden ist.

15. Waschvorrichtung (1) gemäß Anspruch 14, wobei die Hilfsflüssigkeit Leitungswasser beinhaltet.

16. Waschvorrichtung (1) gemäß einem der Ansprüche 1-13, wobei der Wärmespeichertank (30') ein geschlossener Tank ohne Zu- und/oder Ablauf von Hilfsflüssigkeit ist.

## Revendications

1. Appareil de lavage (1) comprenant :
un boîtier ayant un couvercle supérieur,
une chambre (10) pour recevoir des biens destinés à être lavés,
une pompe à chaleur (20) comprenant un premier échangeur de chaleur (22), un second échangeur de chaleur (24), un compresseur (26) et un dispositif d'abaissement de la pression (28) formant un circuit comprenant un réfrigérant (R), le premier échangeur de chaleur (22) étant adapté pour refroidir ledit réfrigérant et pour chauffer de l'eau de lavage destinée à être utilisée dans la chambre (10), le second échangeur de chaleur (24) étant adapté pour chauffer ledit réfrigérant et pour refroidir un fluide auxiliaire, et
un réservoir de stockage thermique (30') adapté pour contenir un liquide,
dans lequel ledit second échangeur de chaleur (24) comprend au moins un module d'échangeur de chaleur (102), ledit module incluant :
un collecteur d'entrée (105) pour diriger un écoulement dudit réfrigérant (R) vers ledit module ;
un collecteur de sortie (106) pour évacuer un écoulement dudit réfrigérant (R) dudit module ; et
une pluralité de couches d'échange de chaleur (108) reliant de manière fluidique ladite entrée audit collecteur de sortie pour permettre audit réfrigérant de s'écouler de ladite entrée vers ledit collecteur de sortie et/ou inversement ; lesdites couches étant empilées les unes au-dessus des autres dans une direction prédéterminée, chaque couche d'échange de chaleur incluant une pluralité de canaux (107) ;
dans lequel ledit second échangeur de chaleur (24) est adapté pour chauffer ledit réfrigérant (R) et pour refroidir le liquide contenu dans le réservoir de stockage thermique (30'), ledit fluide auxiliaire étant ledit liquide contenu dans ledit réservoir de stockage thermique (30') ; et
un plan de travail, ledit plan de travail incluant le couvercle supérieur et une cavité creuse formant ledit réservoir de stockage thermique (30').

2. Appareil de lavage (1) selon la revendication 1, comprenant
un réservoir d'eau de lavage (30) adapté pour contenir de l'eau de lavage, ledit réservoir d'eau de lavage (30) étant en communication fluidique avec ladite chambre (10);
dans lequel le premier échangeur de chaleur (22) est adapté pour refroidir ledit réfrigérant (R) et pour chauffer de l'eau de lavage contenue dans ledit réservoir d'eau de lavage (30) ; et
dans lequel le premier échangeur de chaleur (22) comprend également un module d'échangeur de chaleur (102), ledit module incluant :
un collecteur d'entrée (105) pour diriger un écoulement dudit réfrigérant (R) vers ledit module ;
un collecteur de sortie (106) pour évacuer un écoulement dudit réfrigérant (R) dudit module ; et
une pluralité de couches d'échange de chaleur (108) reliant de manière fluidique ladite entrée audit collecteur de sortie pour permettre audit réfrigérant de s'écouler de ladite entrée vers ledit collecteur de sortie et/ou inversement ;
lesdites couches étant empilées les unes au-dessus des autres dans une direction prédéterminée, chaque couche d'échange de chaleur incluant une pluralité de canaux (107).

3. Appareil de lavage (1) selon l'une quelconque des revendications précédentes, dans lequel lesdits canaux (107) de chaque couche d'échange de chaleur (108) sont agencés de manière parallèle les uns aux autres.

4. Appareil de lavage (1) selon l'une quelconque des revendications précédentes, dans lequel lesdites couches d'échange de chaleur (108) dudit module d'échangeur de chaleur (102) sont agencées de manière parallèle les unes aux autres.

5. Appareil de lavage (1) selon l'une quelconque des revendications précédentes, dans lequel lesdites couches d'échange de chaleur (108) dudit module d'échangeur de chaleur (102) sont espacées d'une même première distance prédéterminée, dans lequel ladite première distance prédéterminée est inférieure à 20 mm.

6. Appareil de lavage (1) selon la revendication 5, dans lequel lesdites couches d'échange de chaleur (108) dudit module d'échangeur de chaleur (102) sont espacées d'une même première distance prédéterminée, dans lequel ladite première distance prédéterminée est inférieure à 5 mm.

7. Appareil de lavage (1) selon l'une quelconque des revendications précédentes, dans lequel ledit second échangeur de chaleur (24) est couplé thermiquement audit réservoir de stockage thermique (30').

8. Appareil de lavage (1) selon la revendication 7, dans lequel ledit module d'échangeur de chaleur (102) dudit second échangeur de chaleur (24) est au moins partiellement agencé dans ledit réservoir de stockage thermique (30').

9. Appareil de lavage (1) selon la revendication 8, dans lequel les couches (108) du module (102) ne comprennent pas d'ailettes entre elles.

10. Appareil de lavage (1) selon l'une quelconque des revendications précédentes dépendantes de la revendication 2, dans lequel ledit premier échangeur de chaleur (22) est couplé thermiquement audit réservoir d'eau de lavage (30).

11. Appareil de lavage (1) selon la revendication 10, dans lequel ledit module d'échangeur de chaleur (102) dudit premier échangeur de chaleur (22) est au moins partiellement agencé dans ledit réservoir d'eau de lavage (30).

12. Appareil de lavage (1) selon l'une quelconque des revendications précédentes, dans lequel chacune desdites couches d'échange de chaleur (108) définit des première et seconde surfaces d'échange de chaleur (109a, 109b) entre des première et seconde extrémités opposées longitudinalement (108b, 108c) et dans lequel ledit module d'échangeur de chaleur (102) inclut une couche et une couche adjacente dans ladite direction prédéterminée, et un espace vide (g) exempt de tout élément structurel est interposé entre ladite première surface (109a) de ladite couche et ladite seconde surface (109b) de ladite couche adjacente.

13. Appareil de lavage (1) selon l'une quelconque des revendications précédentes, comprenant en outre un circuit de sortie d'eau (50) pour évacuer de l'eau usée de la chambre (10).

14. Appareil de lavage (1) selon l'une quelconque des revendications précédentes, dans lequel ledit réservoir de stockage thermique (30') est relié de manière fluidique au réseau d'eau (40) au moyen d'un conduit (41) configuré de manière à fournir de l'eau du robinet provenant du réseau d'eau (40) au réservoir de stockage thermique (30') en contournant ladite chambre (10).

15. Appareil de lavage (1) selon la revendication 14, dans lequel ledit fluide auxiliaire inclut de l'eau du robinet.

16. Appareil de lavage (1) selon l'une quelconque des revendications 1 à 13, dans lequel le réservoir de stockage thermique (30') est un réservoir fermé, sans entrée et/ou sortie de fluide auxiliaire.
